# EUROPÄISCHE PATENTSCHRIFT

(11) **EP 1 158 639 B1**
(45) Veröffentlichungstag und Bekanntmachung des Hinweises auf die Patenterteilung: **23.07.2003**
(21) Anmeldenummer: 01112323.9
(22) Anmeldetag: 19.05.2001
(51) Int. Cl.: H02G 15/184, H02G 15/103

(54) **Muffenisolierkörper mit Schraubverbinder zur Herstellung einer Kabelverbindung für Mittelspannungs-Kunststoffkabel**
Sleeve insulating body with screw connector for manufacturing a cable connection for medium voltage plastics cables
Corps isolant pour manchon à connecteur à vis pour la fabrication d'une connexion de câble pour câbles synthétiques moyenne tension

(30) Priorität: 26.05.2000 DE 10026088; 23.11.2000 DE 10060110
(43) Veröffentlichungstag der Anmeldung: 28.11.2001
(73) Patentinhaber: CELLPACK GMBH, D-79761 Waldshut-Tiengen (DE)
(72) Erfinder: Pilling, Jürgen, Prof. Dr.-Ing.habil., 02794 Spitzkunnersdorf (DE); Lambrecht, Jens, Dr.-Ing., 65527 Niedernhausen (DE)
(74) Vertreter: Heyner, Klaus, Dr.-Ing.

(56) Entgegenhaltungen:
- EP-A- 0 435 569
- DE-A- 3 235 900
- DE-A- 19 820 869
- DE-C- 4 403 571
- US-A- 3 864 013
- PARRY M H ET AL: "INNOVATIVE SIMPLICITY BROUGHT TO POLYMERIC TRANSMISSION CABLE JOINTS" IEEE TRANSACTIONS ON POWER DELIVERY, IEEE INC. NEW YORK, US, Bd. 5, Nr. 2, 1. April 1990 (1990-04-01), Seiten 760-766, XP000127827 New York ISSN: 0885-8977

## Beschreibung

Zur Herstellung einer Kabelverbindung von Energiekabeln für Nennspannungen über 1 kV bis 42 kV (Mittelspannung) werden üblicherweise ähnlich wie im Bereich der Niederspannung metallische hülsenförmige Verbinder eingesetzt. Die abisolierten Enden der zu verbindenden Leiter werden beidseitig in den Verbinder gesteckt. Die mechanisch feste und elektrisch leitende Verbindung erfolgt durch Verpressen mit einem speziellen Presswerkzeug (Pressverbinder) oder durch Verschrauben mittels seitlich in dem Verbinder angeordnete Schrauben (Schraubverbinder). Das für die zuverlässige Verbindung erforderliche Drehmoment wird dabei entweder mit einem Drehmomentenschlüssel oder durch den Abriss des Schraubenkopfes beim Erreichen des erforderlichen Wertes sichergestellt.

Die Schraubverbinder mit Abreißschraube gewinnen zunehmend an Akzeptanz bei den Anwendern, da sie im Gegensatz zum Pressverbinder zur Montage kein Spezialwerkzeug erfordern. Außerdem kann ein bestimmter Schraubverbinder für mehrere Leiterquerschnitte eingesetzt werden. Man kann auch innerhalb des Querschnittsbereiches Kabel mit unterschiedlichem Querschnitt miteinander verbinden, was bei der Erweiterung bestehender Anlagen oft erforderlich ist.

Zum Wiederaufbau der elektrischen Isolierung und des mechanischen Außenschutzes müssen die metallischen Verbinder und die angrenzenden Leiterabschnitte im abgemantelten Bereich mit geeigneten Isolierstoffen umhüllt werden. Dafür existieren mehrere Lösungen, die grundsätzlich davon ausgehen, dass zunächst an den in üblicher Weise vorbereiteten Kabelenden die elektrisch leitende Verbindung und mechanische Fixierung der beiden Leiterenden mit einem der oben genannten metallischen Verbinder hergestellt wird.

Über dem Verbinder und über der Absetzkante der äußeren Leitschicht des Kabels sind Maßnahmen zur Verringerung der elektrische Feldstärke erforderlich, die als Feldsteuerung oder Feldvergleichmäßigung bezeichnet werden.
Im Bereich über dem Verbinder wird zu diesem Zweck eine elektrisch leitfähige Schicht (innere Leitschicht) angeordnet, die bezüglich des Verbinders und der ihn umgebenden Hohlräume als Faradayscher Käfig wirkt. In einigen Fällen wird der Verbinder auch mit einem mastikartigen Material umhüllt, das eine höhere Permittivität (Dielektrizitätskonstante) als die darüber angeordnete Isolierschicht der Muffe besitzt. Im Bereich über der Absetzkante der äußeren Leitschicht wird entweder eine trichterförmige Elektrode z.B. aus einem leitfähigen Kunststoff (Feldsteuertrichter, kapazitive Feldsteuerung) oder eine Schicht aus einem Isolierstoff mit höherer Permittivität (refraktive Feldsteuerung) angeordnet.
Im weiteren Aufbau der Muffenisolierung folgen eine Isolierschicht und eine äußere Leitschicht zur Begrenzung des elektrischen Feldes.

Die folgenden Beschreibungen beschränken sich auf vier wesentliche, mehr oder weniger bewährte Prinzipien des Aufbaus der Muffenisolierung.

Erstens Wickelmuffe: Die o.g. Elemente des Muffenisolierkörpers werden durch das Wickeln isolierender und halbleitfähiger Bänder hergestellt. Die Feldsteueuerung über der Absetzkante der äußeren Leitschicht ist kapazitiv; es erfolgt eine keulenförmige Wickelung in diesem Bereich.
Vorteil dieser Technologie ist, dass keine Parkposition für die Bereithaltung der Muffenelemente vor der Verbindung benötigt wird.
Nachteil ist der hohe Zeitaufwand für die Montage, wobei Lufteinschlüsse möglich sind, die zu elektrischen Teilentladungen führen können. Nachteilig ist auch, dass keine Werksendprüfung des Muffenisolierkörpers erfolgen kann.

Zweitens Warmschrumpfmuffe: Hierbei wird der Muffenisolierkörper aus warmschrumpfenden Polyolefinschläuchen aufgebaut, die vor der Montage des Verbinders in eine Parkposition auf einem Ende des Kabels gebracht werden müssen. Zur Feldvergleichrnäßigung über dem Verbinder wird das o.g. Mastik verwendet. Die Feldsteuerung über der Absetzkante der äußeren Leitschicht ist refraktiv. Die äußere Leitschicht wird üblicherweise durch Coextrusion mit der darunter angeordneten Isolierschicht verbunden.
Technologischer Vorteil ist insbesondere die geringe Montagezeit.
Nachteil ist die auch hier erforderliche Parkposition über dem Kabelmantel. Des weiteren ist zur Montage eine Gasflamme erforderlich, die zur thermischen Schädigung der Materialien führen kann. Eine Werksendprüfung des Muffenisolierkörpers kann ebenfalls nicht durchgeführt werden.

Drittens Aufschiebemuffe: Bei der Aufschiebemuffe wird der Muffenisolierkörper aus elastischen Isolierwerkstoffen (z.B. Silikon, Ethylen-Propylen-Dien-Monomer (EPDM)) beim Hersteller vorwiegend in Spritzgießtechnik gefertigt. Vor der Montage des Verbinders wird er in eine Parkposition über der äußeren Leitschicht auf eines der beiden Kabelenden geschoben. Der Innendurchmesser des zumeist rohrförmigen Muffenisolierkörpers ist kleiner als der Durchmesser über der Aderisolierung des Kabels mit dem kleinsten Leiterquerschnitt im Anwendungsbereich. Damit wird ein dauerhafter Anpressdruck im Interface zwischen Aderisolierung und Muffenisolierung erreicht. Nach der Montage des Verbinders wird der Muffenisolierkörper in die Endposition zurückgeschoben. Für das Verschieben wird meistens ein Gleitmittel, z.B. Silikonoel, verwendet. Die Feld-Steuerung kann kapazitiv oder refraktiv sein.
Vorteile dieser Technologie sind die einfache Montage ohne Gasflamme; auch eine Prüfung der Querisolierung des Muffenisolierkörpers ist beim Hersteller möglich. Wesentlicher Nachteil ist die wiederum erforderliche Parkposition über der äußeren Leitschicht , wobei vom Kabel in diesem Bereich der Kabelmantel entfernt werden muss. Dies erfordert mehr Arbeitsaufwand und eine um die Länge der Parkposition verlängerte äußere Schutzhülle. Der Kraftaufwand beim Verschieben ist hoch und begrenzt die Größe des Anwendungsbereiches nach oben.

Viertens Kaltschrumpfmuffe nach DE 39 43 296 C2: Der Aufbau des Muffenisolierkörpers ähnelt dem der Aufschiebemuffe. Er wird jedoch vor der Montage mit einer speziellen Vorrichtung radial soweit aufgeweitet, dass er in eine Parkposition über dem Kabelmantel gebracht werden kann. Nach der Montage des Verbinders wird die Aufweitvorrichtung entfernt, der Muffenisolierkörper entspannt sich und "schrumpft kalt" in die Endposition. Die Vorrichtung kann z.B. eine Stützwendel sein, die beim Hersteller eingebracht wird. In diesem Fall wird der Muffenisolierkörper im stark gedehnten Zustand (z.B. 230%) transportiert und gelagert, was zu einer Materialermüdung des Elastomers und zu einer bleibenden Dehnung führen kann. Andere Hersteller (Cossonay, CH und ABB Kabeldon, S) verwenden rohrförmige, längs teilbare Stützhülsen, die erst vor der Montage eingeschoben werden, was mit einer kürzeren Zeit für die Überdehnung verbunden ist. In einer 3. Variante wird der elastische Muffenisolierkörper mit einer aus PE-Gleitstegen bestehenden Aufschiebehife auf den Kabelmantel geschoben, so dass ebenfalls keine Parkposition auf der äußeren Leitschicht erforderlich ist sowie Zeitdauer und Grad der Überdehnung während der Montage minimiert sind.

Eine derartige aus einer ringförmigen Anordnung von zueinander beabstandeten PE-Gleitstegen bestehende Aufschiebehilfe ist aus DE 195 10 598 A1 bekannt.
Des weiteren ist aus DE 195 13 618 A1 ein Muffenisolierkörper zur Verbindung von zwei Kabeln im Mittelspannungsbereich bekannt, der einen Preß- oder Schraubverbinder für die zu verbindenden Leiter und Mittel zur Steuerung des elektrischen Feldes in Form von Feldsteuerschläuchen und in Konusform gewickelter Bänder aufweist.
In DE 197 27 567 A1 wird eine Abzweigklemme für ein Abzweigkabel und Hausanschlussmuffe beschrieben, bei der der aus Klemmstück und Klemmschrauben bestehende metallische Schraubverbinder von einem Isolierkörper fest umschlossen ist.

Dabei besteht der Isolierkörper aus einem Isoliermantel, der den Schraubverbinder umhüllt und der an beiden Stirnseiten des Verbinders elastische Dichtungen zur Aufnahme der Kabelenden aufweist und an den Zugängen zu den Klemmschrauben Öffnungen besitzt, die durch Stöpsel aus Isoliermaterial verschließbar sind.

Aus DE 198 20 869 A1 sind Mittel in Form von schrumpfbaren konischen Hohlkörpern zur Anpassung des Querschnitts von Isolierdurchführungen bzw. Tüllen an den Kabelquerschnitt bekannt, die darüber hinaus noch Feldsteuerkörper beinhalten.

Die in der als nächstliegenden stand der Technik angesehenen DE 44 03 571 C1 beschriebene Verbindungsmuffe für kunststoffisolierte Hochspannungsenergieversorgungskabel besteht aus einer Verbindungsklemme, die einen durchgehenden Längskanal zur Aufnahme der beiden abisolierten Kabelenden aufweist, weiterhin aus Isolierkörpern die auf den vom Kabelmantel befreiten, aber noch mit der Kunststoffisolation versehenen Endabschnitt je eines der zu verbindenden Kabel aufschiebbar sind und im aufgeschobenen Zustand an der Kunststoffisolation anliegen, und zusätzlich aus einem die Verbindungsklemme und die Isolierkörper aufnehmenden formstabilen und in Gehäusequerrichtung geteilten Gehäuse.
Die beiden Gehäuseteile sind mittels Verbindungselementen gegeneinander spannbar und mit wenigstens je einer Spannfläche versehen, welche im zusammengespannten Zustand der beiden Gehäuseteile die Isolierkörper elektrisch dicht aneinander und an die Kunststoffisolation der Kabel pressen.

Ausgehend vom dargestellten Stand der Technik ist es Aufgabe der Erfindung einen Muffenisolierkörper zu entwickeln, der keine Parkposition erfordert, einfach zu montieren ist, wenig Isoliermaterial benötigt und rationell hergestellt werden kann. Es muss die Möglichkeit bestehen, den Muffenisolierkörper zur Erhöhung der Zuverlässigkeit im Betrieb einer 100-%-Prüfung mit Hochspannung zu unterziehen.

Eine erfindungsgemäße Lösung dieser Aufgabe ist im Patentanspruch 1 angegeben. Weiterbildungen der Erfindung sind in den Unteransprüchen gekennzeichnet.

Nach der Konzeption der Erfindung wird ein metallischer Schraubverbinder und ein zugehöriger, den Schraubverbinder umhüllender wasserdichter Muffenisolierkörper bereits vom Hersteller zu einem kompakten Montageteil in der Weise zusammengefaßt, dass der Schraubverbinder in den in seinen Endbereichen elastischen Muffenisolierkörper fest integriert ist.
Dieses Montageteil wird vom Hersteller vorzugsweise als stückgeprüfte Einheit "Schraubverbinder - Muffenisolierkörper" produziert und in dieser kompakten Form an die Kunden ausgeliefert.

Der Grundaufbau des Muffenisolierkörpers mit integriertem Schraubverbinder besteht darin, dass ein metallischer Schraubverbinder, z.B. im Spritzgießverfahren, mit einem festhaftenden Isoliermantel umhüllt wird, der sich an beiden Stirnseiten des Verbinders in elastischen Tüllen zur Aufnahme der Kabelenden fortsetzt.
An den Zugängen zu den Klemmschrauben für die elektrische und mechanische Verbindung der Kabel mit dem Verbinder sind in den Isoliermantel Öffnungen eingebracht, die nach dem Entfernen der Abreißköpfe der Klemmschrauben durch Stöpsel aus Isolierstoff oder eine schlauchförmige elastische Manschette verschlossen werden.
Beim Verschließen der Öffnungen durch Stöpsel weisen diese Öffnungen einen ausgeprägten zylindrischen oder gekrümmten Rand auf, der vom Stöpseldeckel konzentrisch überdeckt wird.
Stöpseldeckel und zylindrischer bzw. gekrümmter Rand der Öffnung besitzen an ihrer äußeren und ggf. parallel verlaufenden Kontaktfläche eine angepaßte Profilierung zur zuverlässigen Fixierung des Stöpsels beispielsweise durch Einrasten.

Werden die Öffnungen im Isoliermantel mittels der schlauchförmigen elastischen Manschette verschlossen, so besitzt diese Manschette als Voraussetzung für den Montagezugang zu den Klemmschrauben des Schraubverbinders einen Durchbruch von etwa gleicher Größe wie die Öffnung im Isoliermantel. Dieser Durchbruch wird während der Montage über der Öffnung im Isoliermantel positioniert. Nach abgeschlossener Montage wird die Manschette soweit um ihre und damit gleichzeitig um die Längsachse der Muffe verdreht, bis die Manschette mit ihrem Durchbruch in eine auf etwa der gleichen Umfanglinie aus dem Isoliermantel des Muffenisolierkörper herausstehende Verdickung einrastet und damit ihre Endposition einnimmt.

Zur Beherrschung der Feldverhältnisse und Erhöhung des Isoliervermögens im Interface ist an der Innenoberfläche der Manschette eine refraktiv wirkende Feldsteuerschicht so bemessen und angeordnet, dass sie in der Endposition der Manschette die Öffnung im Isoliermantel und beide Ränder der inneren und äußeren Leitschicht des Muffenisolierkörpers im Interface zuverlässig überdeckt.

Bei einer alternativen Lösung besitzt die Manschette keinen Durchbruch. Sie wird während der Montage der Leiter im Schraubverbinder in einer seitlich verschobenen Parkposition gehalten. Nach Beendigung des Anklemmvorgangs der Leiter ermöglicht das Aufbringen von Gleitmittel eine axiale Längsverschiebung der Manschette in die Endposition und sie überdeckt dabei die Öffnung(en) im Isoliermantel

Die Feldsteuerung über dem Kabelende kann in die Tülle integriert sein .

Die Einführöffnungen für die Stöpsel und die Stöpselzylinder selbst ergeben ein Interface mit einem elektrischen Isoliervermögen, das für einen zuverlässigen Betrieb der Muffe erforderlich und ausreichend ist. Dazu erhält der Stöpsel außen am Stöpselzylinder eine refraktiv wirkende Feldsteuerschicht. Nach Einführung der Kabelenden durch die Tüllen und Verschrauben der Kabelenden im Schraubverbinder sowie nach Verschließen der Schraubenöffnungen mit den feldgesteuerten Stöpseln ist das Isoliervermögen der Muffe hergestellt. Anschließend erfolgt das Verbinden der Schirmung und der Aufbau des äußeren mechanischen Schutzes, das nicht Gegenstand der Erfindung ist.

Der so aufgebaute Muffenisolierkörper kann auch als Abzweigmuffe gestaltet werden. Er besitzt dann einen oder mehrere weitere Kabeleingänge sowie für jeden Kabeleingang ein oder zwei weitere Schrauböffnungen mit Stöpsel- oder Manschettenverschluß. Im Gegensatz zu allen auf dem Markt befindlichen Mittelspannungs-Abzweigmuffen ist mit diesem Prinzip auch ein T-förmiger Abzweig realisierbar, der sich vor allem im Kurzschlussfall günstiger verhält als der sogenannte Parallelabzweig.
Zum Einführen der Kabelenden in die elastischen Tüllen können die Aufschiebehilfen nach Patent DE 195 10 598 A1 eingesetzt werden.

Weitere Einzelheiten, Merkmale und Vorteile der Erfindung ergeben sich aus der nachfolgenden Beschreibung eines Ausführungsbeispiels unter Bezugnahme auf die zugehörige Zeichnung. Es zeigen
- Fig. 1: einen Muffenisolierkörper mit integriertem Verbinder in Schnittdarstellung
- Fig. 2: eine bevorzugte Ausführungsform des Stöpsels als Schnittdarstellung,
- Fig. 3: die vergrößerte Darstellung der in die Öffnung für die Abreißschraube ragenden Kanten der inneren und äußeren Leitschicht des Muffenisolierkörpers,
- Fig. 4: einen Muffenisolierkörper mit Manschettenverschluß im Querschnitt und

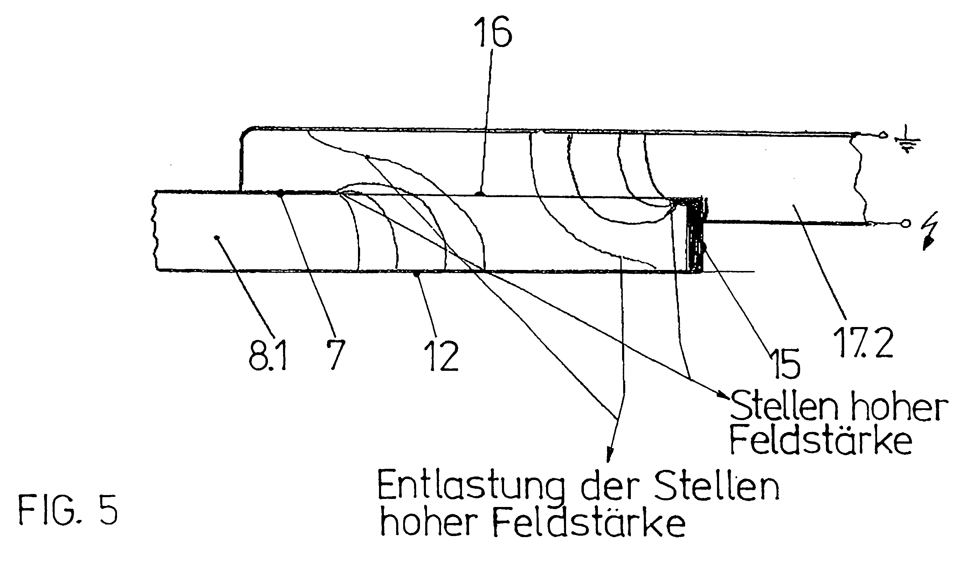

- Fig. 5: eine Detaildarstellung der montierten Manschette im Bereich des Durchbruchs zur Abreißschraube.

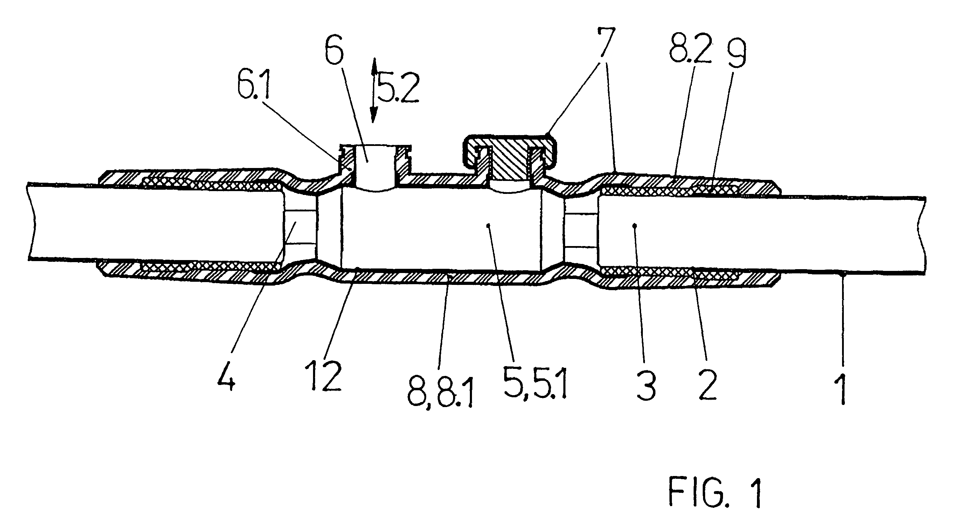

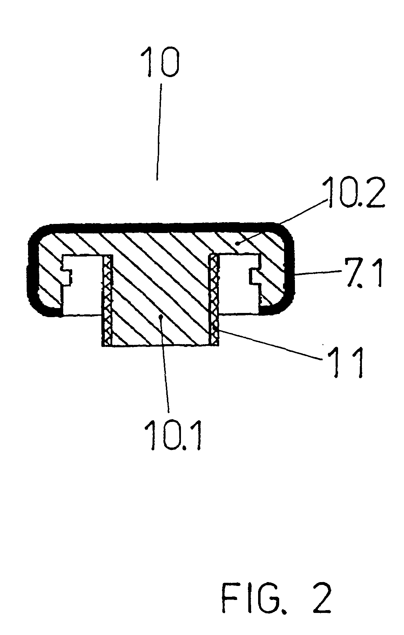

Fig. 1 veranschaulicht den Grundaufbau eines Muffenisolierkörpers 8 mit mittig angeordnetem, vom Isoliermantel 8.1 umschlossenen Schraubverbinder 5. Von den Stirnseiten des Schraubverbinders 5 wegführend schließen sich an den Isoliermantel 8.1 die Tüllen 8.2 zur wasserdichten Aufnahme der Kabelenden an. Der Klemmvorgang zur Verbindung der Leiter 4 der beiden Kabelenden im Klemmstück 5.1 erfolgt mittels Abreißschrauben 5.2 durch die Öffnungen 6. Nach Abschluß des Montagevorganges werden die Öffnungen 6 mittels der Stöpsel 10 aus Isolierstoff, vgl. Fig. 2, wasserdicht verschlossen.

Zur Feldsteuerung über dem Kabelende ist jeweils ein Feldsteuerelement 9 in die Tülle 8.2 integriert. Dieses Feldsteuerelement stellt die Verbindung zwischen der äußeren Leitschicht 1 des Kabels über die Aderisolierung 3 und der inneren Leitschicht 12 des Verbinders 5 bzw. Muffenisolierkörpers 8 her. Sie reicht dabei bis über die Absetzkante der äußeren Leitschicht 2.

Die Anordnung der Mittel zur Feldsteuerung am Stöpsel 10 geht aus Fig. 1 in Verbindung mit Fig. 2 hervor.
Auf den Stöpselzylinder 10.1 ist eine Feldsteuerschicht 11 aufgebracht.

Die durchgehende Ausbildung der äußeren Leitschicht des Muffenisolierkörpers 7 umfaßt auch den Stöpseldeckel 10.2.
Zur sicheren Herstellung der Verbindung des Stöpsels 10 mit der Öffnung 6 besitzt die Öffnung einen ausgeprägten zylindrischen Rand 6.1, an dem der Stöpselzylinder 10.1 mit der Feldsteuerschicht 11 anliegt.

Zur Gewährleistung einer zuverlässigen mechanischen Verbindung des Stöpsels 10 mit dem Muffenisolierkörper 8 ist der Stöpseldeckel 10.2 den zylindrischen Rand 6.1 umgreifend abgewinkelt und geht im Bereich der Überlappung von Stöpseldeckel 10.2 und zylindrischer Rand 6.1 eine Rastverbindung mit dem Rand 6.1 ein.
Diese Rast- bzw. Schnappverbindung kann durch einen Spannring unterstützt werden, der in Höhe des Noppenkranzes im abgewinkelten Teil des Stöpseldeckels 10.2 angeordnet ist.

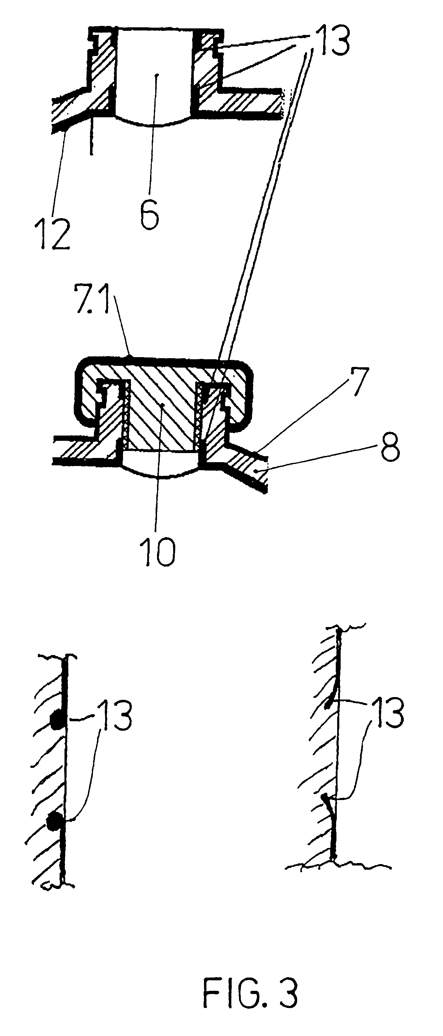

Der Außendurchmesser des Stöpsels 10 mit der Feldsteuerschicht 11 1 ist mindestens 5% größer als der Innendurchmesser der Öffnung 6, damit die Grenzfläche einen permanenten Anpreßdruck erfährt, der für das zuverlässige elektrische Isoliervermögen erforderlich ist.
Die weiteren Abmessungen im Randbereich der Öffnungen sowie im Überwurfbereich des Stöpsels sind so gestaltet, dass im eingebauten, gedehnten Zustand keine Hohlräume an den sich berührenden Grenzflächen entstehen.
Zum Zwecke der kapazitiven Feldsteuerung können die in die Öffnung 6 ragenden Kanten 13 der inneren 12 und der äußeren Leitschicht 7, 7.1 des Muffenisolierkörpers 8 abgerundet oder trichterförmig ausgebildet sein, s. Fig. 3. Fig. 3 zeigt die erwähnten Kanten 13 der beiden Leitschichten 7, 12 in einem vergrößerten Ausschnitt.

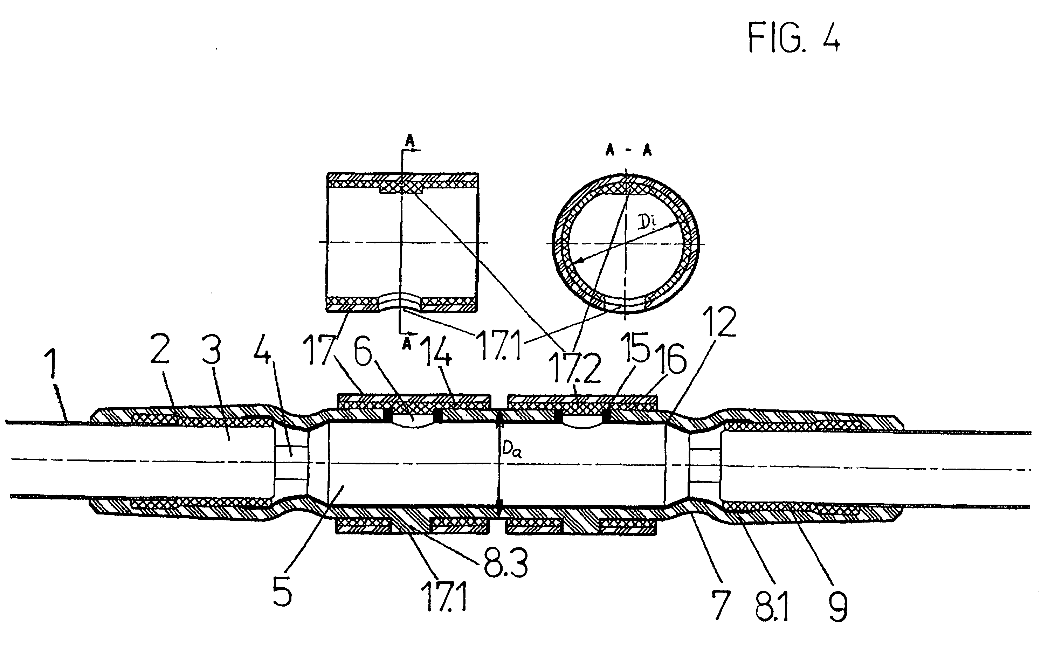

Fig. 4 .veranschaulicht einen Muffenisolierkörper 8, bei dem die beiden Öffnungen für die Abreißschrauben 6 im Isoliermantel 8.1 durch je eine schlauchförmige elastische Manschette 17 verschlossen werden.

Die Höhe des Randes 15 des Isoliermantels in der Öffnung 6 ist vorzugsweise gleich der Dicke des Isoliermantels 8.1 über dem Schraubverbinder 5. Die innere Leitschicht 12 wird nach außen geführt und bildet einen umlaufenden leitfähigen Rand 15 in der Ebene des Isoliermantels 8.1 mit einer Breite von z.B. 3 mm.
Die äußere Leitschicht 7 des Muffenisolierkörpers 8 wird um die Öffnung 6 herum soweit unterbrochen, dass ein konstanter Abstand zum Rand der inneren Leitschicht 12 entsteht. Damit wird der Isolierbereich des Interfaces 16 gebildet. Die Interface-Isolierstrecke, d.h. der Abstand der Ränder von innerer und äußerer Leitschicht 12, 7, liegt je nach der Isolationsspannung der Muffe im Bereich von ca. 5 mm bis ca. 30 mm.

Die elastische Manschette 17 wird in der dargestellten Weise angeordnet. Sie wird aus Elastomeren in Spritzgießtechnik hergestellt, z.B. EPDM oder Silikon. Ihr innerer Durchmesser D; ist kleiner als der Außendurchmesser Dₐ des Verbinders über der äußeren Leitschicht 7. Damit wird die aufgesetzte Manschette gedehnt, so dass ein permanenter radialer Anpressdruck erzeugt wird, der für das Isoliervermögen im Interface erforderlich ist.

Zur Erhöhung des elektrischen Isoliervermögens im Interface 16 besitzt die Manschette 17 an der Innenoberfläche eine refraktiv wirkende Feldsteuerschicht 14 die mindestens so breit ist, dass sie in der Endposition beide Ränder der Leitschichten 12, 7 im Interface 16 sicher überdeckt. In der Mitte dieses Bereiches besitzt die Manschette eine Verdickung 17.2 die in der Endposition formschlüssig in die Öffnung 6 des Isoliermantels eintaucht und zur Arretierung der Manschette in deren Endposition beiträgt. Die Unterseite der Verdickung 17.2 und ihre Seitenfläche sind leitfähig beschichtet und im montierten Zustand mit der Leitschicht 7 galvanisch verbunden, damit Teilentladungen im Hohlraum über der Abreißschraube unmöglich sind, vgl. auch Fig. 2. Die Führung der inneren Leitschicht 12, 15 einerseits und der äußeren Leitschicht 7 andererseits bewirken bereits jeweils eine Feldstärkeverringerung an den beiden Rändern im Interface 16. Durch entsprechende Gestaltung kann dieser Effekt verstärkt werden.

Die Manschette enthält ferner einen etwa kreisförmigen Durchbruch 17.1, der die gleiche Größe wie die Öffnung 6 im Isoliermantel besitzt. Der Durchbruch 17.1 ist etwa gegenüber der Verdickung 17.2 in der Manschette angeordnet.

Zwischen der Manschette und der Oberfläche der Muffenisolierung befindet sich ein Gleitmittel.
Zum Zweck der Montage wird die Manschette soweit verdreht bis Durchbruch 17.1 und Öffnung 6 von Manschette bzw. Muffenisoliermantel übereinanderliegen. Nach Befestigung der Schraube und Abriss des Schraubenkopfes wird die Manschette soweit gedreht bis die Verdickung 17.2 in die Öffnung 6 des Isoliermantels einrastet (Endposition der Manschette).

Die Arretierung der Manschette wird noch dadurch verbessert, dass die Muffenisolierschicht 8.1 eine Verdickung 8.3 erhält, die in der Endposition in den Durchbruch 17.1 der Manschette hineinragt. Damit wird auch der Randbereich des Loches gegen Verletzungen geschützt. Die Anordnung der beiden Kombinationen Isoliermantel-Öffnung 6 und Manschettenverdickung 17.2 einerseits sowie Manschettendurchbruch 17.1 und Isoliermantelverdickung 8.3 andererseits kann zueinander so erfolgen, dass in der Montageposition die beiden Verdickungen 8.3, 17.2 nicht übereinander fallen, also um einen Winkel < 180° versetzt sind.

Beidseitig neben den Manschetten 17 können umlaufende Wülste angeordnet sein, die das Verschieben der Manschetten in axialer Richtung verhindern.
Das ManschettenManschetten-Feldsteuermaterial 14 kann zur Kostenoptimierung nur im Bereich der Interface-Isolierstrecke 16 eingesetzt werden.

Bei der alternativen Lösung mit einer Manschette 17 ohne Durchbruch 17.1 und ohne Verdickung 17.2 ist die axiale Verschiebung Funktionsvoraussetzung. Hier wird während der Leitermontage die Manschette soweit seitlich vorschoben in einer Parkposition gehalten, dass die Manschette die Öffnung(en) 6 freigibt.

Die axiale Verschiebung der Manschette 17 in die Endposition, in der sie die Öffnung(en) 6 überdeckt, wird durch Aufbringen von Gleitmittel, vorzugsweise Siliconöl oder Fett, ermöglicht. Das Gleitmittel diffundiert in die Gleitpaarung Manschette 17 und Isoliermantel des Muffenisolierkörpers 8.1 ein und bewirkt letztlich eine festhaftende Verbindung

Die Manschette kann einteilig für 2 bis 4 Abreißschrauben gestaltet werden.

Der prinzipielle Aufbau kann für Verbindungsmuffen bis 1 kV ohne Leitschichten und Feldsteuerschichten angewendet werden.

### LISTE DER BEZUGSZEICHEN

- 1: Äußere Leitschicht des Kabels
- 2: Absetzkante der äußeren Leitschicht
- 3: Aderisolierung
- 4: Leiter
- 5: Schraubverbinder
5.1 Klemmstück
5.2 Klemmschraube
- 6: Öffnung für Abreißschraube
6.1 zylindrischer Rand
- 7: Äußere Leitschicht des Muffenisolierkörpers
7.1 des Stöpseldeckels
- 8: Muffenisolierkörper
8.1 Isoliermantel
8.2 Tüllen
8.3 Verdickung im Isoliermantel
- 9: Feldsteuerelement
- 10: Stöpsel
10.1 Stöpselzylinder
10.2 Stöpseldeckel
- 11: Feldsteuerschicht
- 12: innere Leitschicht des Muffenisolierkörpers
- 13: Kanten der inneren und äußeren Leitschicht
- 14: Feldsteuerschicht in der Manschette
- 15: Rand der inneren Leitschicht als Begrenzung der Interface-Isolierung
- 16: Interface
- 17: Manschette
17.1 Durchbruch für Zugang zur Abreißschraube in der Manschette
17.2 Verdickung der Manschette

## Patentansprüche

1. Muffenisolierkörper (8) mit Schraubverbinder (5) zur Herstellung einer Kabelverbindung für Mittelspannungs-Kunststoffkabel unter Verwendung eines metallischen hülsenförmigen Klemmstückes (5.1) mit senkrecht zur Verbinder- und Kabellängsachse vorhandenen Schraubschächten und eindrehbaren Klemmschrauben (5.2) und von über dem Schraubverbinder bis in den Bereich über der Absetzkante der äußeren Leitschicht (1) des Kabels angeordneten Mitteln zur Verringerung der elektrischen Feldstärke,
**dadurch gekennzeichnet, dass** der aus Klemmstück (5.1) und Klemmschrauben (5.2) bestehender metallischer Schraubverbinder (5) von dem Muffenisolierkörper (8) fest umschlossen ist, wobei
a) der Muffenisolierkörper (8) aus einem Isoliermantel (8.1) besteht, der den Schraubverbinder (5) umhüllt und der sich an den beiden Stirnseiten des Verbinders in elastischen Tüllen (8.2) zur Aufnahme der Kabelenden fortsetzt,
b) an den Zugängen zu den Klemmschrauben (5.2) Öffnungen (6) in den Isoliermantel (8.1) eingebracht sind, die durch Stöpsel (10) aus Isoliermaterial oder eine schlauchförmige elastische Manschette (17) verschließbar sind,
c) in jeder Tülle (8.2) ein Feldsteuerelement zwischen der äußeren Leitschicht (1) des ein führbaren Kabels an jedem Kabelende und einer inneren Leitschicht (12) des Muffenisolierkörpers (8) vorhanden ist,
d) bei der Ausführung des Verschlusses der Öffnungen (6) durch Stöpsel (10) die Wandungen der in Öffnungen (6) eintauchenden Stöpselzylinder (10.1) eine Feldsteuerung und dabei vorzugsweise mindestens eine refraktiv wirkende Feldsteuerschicht (11) aufweisen und die Oberfläche des Stöpseldeckels (10.2) eine äußere Leitschicht (7.1) besitzt, die mit der äußeren Leitschicht des Muffenisolierkörpers (7) galvanisch verbunden ist,
e) bei Ausführung des Verschlusses der Öffnungen (6) mit einer schlauchförmigen elastischen Manschette (17) an der Innenoberfläche der Manschette (17) eine refraktiv wirkende Feldsteuerschicht (14) so bemessen und angeordnet ist, dass sie in der Endposition der Manschette (17) die Öffnung (6) im Isoliermantel (8.1) und beide Ränder der inneren und äußeren Leitschicht (12, 7) des Muffenisolierkörpers im Interface (16) zuverlässig überdeckt.

2. Muffenisolierkörper mit Schraubverbinder nach Anspruch 1,
**dadurch gekennzeichnet, dass** der Querschnitt der Tülle (8.2) variabel ist und so gewählt wird, dass unterschiedliche Leiterformen wasserdicht umschlossen sind.

3. Muffenisolierkörper mit Schraubverbinder nach Anspruch 2,
**dadurch gekennzeichnet, dass** der Durchmesser der Tülle (8.2) so gewählt ist, dass sie nach der Montage der Kabelader mit dem kleinsten Leiterquerschnitt des Anwendungsbereichs mindestens 5% gedehnt ist.

4. Muffenisolierkörper mit Schraubverbinder nach Anspruch 1,
**dadurch gekennzeichnet, dass** die Öffnungen (6) einen ausgeprägten zylindrischen oder gekrümmten Rand (6.1) aufweisen, an dem der Stöpselzylinder (10.1) mit der aufgebrachten Feldsteuerschicht (11) flächig anliegt und dieser zylindrische Rand (6.1) vom Stöpseldeckel (10.2) konzentrisch überdeckt wird.

5. Muffenisolierkörper mit Schraubverbinder nach Anspruch 1 oder 4,
**dadurch gekennzeichnet, dass** die Paarung Stöpseldeckel (10.2) und zylindrischer oder gekrümmter Rand (6.1) der Öffnung (6) im Isoliermantel (8.1) an ihrer äußeren Kontaktfläche eine angepaßte Profilierung aufweist, die eine zuverlässige Fixierung des Stöpsels (10) und Überdeckung der Öffnung (6) sichert.

6. Muffenisolierkörper mit Schraubverbinder nach einem der Ansprüche 1, 4 oder 5,
**dadurch gekennzeichnet, dass** der Stöpseldeckel (10.2) zur Überdeckung des zylindrischen oder gekrümmten Randes (6.1) der Öffnung (6) in Richtung Kabelachse und senkrecht zur Kabelachse abgewinkelt ist.

7. Muffenisolierkörper mit Schraubverbinder nach einem der Ansprüche 1 oder 4 bis 6,
**dadurch gekennzeichnet, dass** der Stöpsel (10) in seinen Bereichen Stöpselzylinder (10.1) und Stöpseldeckel (10.2) vollständig aus dem refraktiv wirkenden Feldsteuermaterial der Schicht (11) aufgebaut ist.

8. Muffenisolierkörper mit Schraubverbinder nach einem der Ansprüche 1 oder 4 bis 7,
**dadurch gekennzeichnet, dass** der Außendurchmesser des Stöpsels (10) mit der Feldsteuerschicht (11) mindestens 5% größer ist als der Innendurchmesser der Öffnung (6).

9. Muffenisolierkörper mit Schraubverbinder nach einem der Ansprüche 1 oder 4 bis 8,
**dadurch gekennzeichnet, dass** zum Zwecke der Feldsteuerung die in die Öffnung (6) ragenden Kanten (13) der inneren (12) und der äußeren Leitschicht (7, 7.1) des Muffenisolierkörpers (8) abgerundet oder trichterförmig ausgebildet sind.

10. Muffenisolierkörper mit Schraubverbinder nach Anspruch 1,
**dadurch gekennzeichnet, dass** bei Ausführung des Verschlusses der Öffnungen (6) im Isoliermantel (8.1) der Muffe mit der schlauchförmigen elastischen Manschette (17) diese auf den Muffenisolierkörper (8) aufgebrachte Manschette mindestens einen etwa kreisförmigen Durchbruch (17.1), der etwa die gleiche Größe wie die Öffnung (6) im Isoliermantel (8.1) besitzt, und der während der Montage über der Öffnung (6), diese Öffnung freigebend, positioniert ist und nach abgeschlossener Montage um etwa 180° verdreht so angeordnet ist, dass zur Arretierung der Manschette (17) in der Endposition eine etwa gegenüber der Öffnung (6) aus dem Isoliermantel (8.1) der Muffe nach außen stehende Verdickung (8.3) umfasst wird.

11. Muffenisolierkörper mit Schraubverbinder nach Anspruch 10,
**dadurch gekennzeichnet, dass** der lsoliermantel (8.1) einen Rand (15) aufweist, dessen Höhe in der Öffnung (6) vorzugsweise der Dicke des Isoliermantels (8.1) über dem Schraubverbinder (5) entspricht, wobei die innere Leitschicht (12) des Muffenisolierkörpers nach außen geführt ist und diesen in der Öffnung (6) umlaufenden Rand (15) bildet.

12. Muffenisolierkörper mit Schraubverbinder nach Anspruch 10 oder 11,
**dadurch gekennzeichnet, dass** die äußere Leitschicht (7) des Muffenisolierkörpers, die die Öffnung (6) umfasst, soweit unterbrochen ist, dass ein etwa konstanter Abstand zum Rand (15) der inneren Leitschicht (12) entsteht, was den Isolierbereich des Interface (16) bildet.

13. Muffenisolierkörper mit Schraubverbinder nach Anspruch 12,
**dadurch gekennzeichnet, dass** die Interface-lsolierstrecke (16), d.h. der Abstand der Ränder von innerer und äußerer Leitschicht (12, 7) des Muffenisolierkörpers, abhängig von der Isolationsspannung der Muffe, im Bereich von ca. 5 mm bis ca. 30 mm liegt.

14. Muffenisolierkörper mit Schraubverbinder nach einem der Ansprüche 10 bis 13,
**dadurch gekennzeichnet, dass** die Manschette (17) an der Innenseite der Feldsteuerschicht (14) eine Verdickung (17.2) aufweist, die so angeordnet ist, dass sie in der Endposition formschlüssig in die Öffnung (6) des Isoliermantels (8.1) eintaucht.

15. Muffenisolierkörper mit Schraubverbinder nach Anspruch 14,
**dadurch gekennzeichnet, dass** die Verdickung (17.2) in der Feldsteuerschicht (14) leitfähig beschichtet ist oder aus einem leitfähigem Elastomer besteht.

16. Muffenisolierkörper mit Schraubverbinder nach einem der Ansprüche 10 bis 15,
**dadurch gekennzeichnet, dass** die schlauchförmige elastische Manschette (17) im Ausgangszustand so bemessen ist, dass ihr innerer Durchmesser Dᵢ kleiner ist als der Außendurchmesser Dₐ von Verbinder (5) und Isoliermantel (8.1) über der äußeren Leitschicht (7).

17. Muffenisolierkörper mit Schraubverbinder nach einem der Ansprüche 10 bis 16,
**dadurch gekennzeichnet, dass** die beiden Paarungen Isoliermantel-Öffnung (6) und Manschettenverdickung (17.2) einerseits sowie Manschettendurchbruch (17.1) und Isoliermantelverdickung (8.3) andererseits über den radialen Umfang der Muffe so angeordnet sind, dass in der Endposition die beiden Verdickungen nicht übereinander fallen.

18. Muffenisolierkörper mit Schraubverbinder nach einem der Ansprüche 10 bis 17,
**dadurch gekennzeichnet, dass** beidseitig neben den Manschetten (17) umlaufende Wülste angeordnet sind.

19. Muffenisolierkörper mit Schraubverbinder nach einem der Ansprüche 10 bis 18,
**dadurch gekennzeichnet, dass** die Feldsteuerschicht (14) in der Manschette (17) nur im Bereich der Isolierstrecke des Interface (16) angeordnet ist.

20. Muffenisolierkörper mit Schraubverbinder nach einem der Ansprüche 10 bis 19,
**dadurch gekennzeichnet, dass** im Interface (16) eine geometrische Feldsteuerung entsprechend der Unteransprüche angewendet ist.

21. Muffenisolierkörper mit Schraubverbinder nach einem der Ansprüche 10 bis 19,
**dadurch gekennzeichnet, dass** im Interface (16) keine gesonderte Feldsteuerung angewendet wird und die dem Rand naheliegende Führung der äußeren und der inneren Leitschicht (7, 12) die geometrische Feldsteuerung bewirkt.

22. Muffenisolierkörper mit Schraubverbinder nach einem der Ansprüche 10 bis 21,
**dadurch gekennzeichnet, dass** die Manschette (17) einteilig für zwei bis vier Abreißschrauben ausgeführt ist.

23. Verwendung des Muffenisolierkörpers mit Manschette nach einem der Ansprüche 10 bis 22,
**dadurch gekennzeichnet, dass** der prinzipielle Aufbau ohne Leitschichten und Feldsteuerschichten auch fiir Verbindungsmuffen bis 1 kV anwendbar ist.

24. Muffenisolierkörper mit Schraubverbinder nach einem der Ansprüche 1 bis 23,
**dadurch gekennzeichnet, dass** das Feldsteuerelement (9) über dem Kabelende in die Tülle (8.2) integriert ist.

25. Muffenisolierkörper mit Schraubverbinder nach einem der Ansprüche 1 bis 24,
**dadurch gekennzeichnet, dass** er als Abzweigmuffe ausgeführt ist, wobei einer oder mehrere weitere Kabeleingänge sowie für jeden Kabeleingang ein oder zwei weitere Schrauböffnungen (6) mit Stöpsel (10) vorgesehen sind.

## Claims

1. A sleeve insulating body (8) with a screw connector (5) for providing a cable connection for medium voltage plastic cables using a metallic sleeve-like connector (5.1) with screw shafts and insertable screws (5.2) vertically disposed relative to the longitudinal axis of the connector and cable and with means for reducing the electrical field strength arranged from above the screw connector to the area above the abutment edge of the outer conductive layer (1) of the cable,
**characterized in that** the metallic screw connector (5) consisting of a connector (5.1) and connector screws (5.2) is rigidly enclosed by the sleeve insulating body (8), whereby
a) the sleeve insulating body (8) consists of an insulating jacket (8.1) which encloses the screw connector (5) and which at both front surfaces of the connector extends as elastic grommets (8.2) for receiving the cable ends;
b) at the accesses to the connector screws (5.2) openings (6) are sunk into the insulating jacket (8.1) which may be closed by plugs (10) made of insulating material or by a tubular elastic cuff (12);
c) in each grommet (8.2) there is provided a field controlling element between the outer conductive layer of the insertable cable (1) at each cable end and an inner conductive layer (12) of the sleeve insulating body (8);
d) when closing the openings (6) by means of plugs (10) the walls of the plug shanks (10.1) inserted into the openings (6) are provided with a field controller and preferably at least one refractively functioning field controlling layer (11) and that the surface of the plug head (10.2) is provided with an outer conductive layer (7.1) which is direct-coupled to the outer conductive layer of the sleeve insulating body (7);
e) when closing the openings (6) by means of a tubular elastic cuff (17) a refractively acting field controlling layer (14) at the inner surface of the cuff (17) is dimensioned and arranged such that at the final position of the cuff (17), the field controlling layer (14) reliably covers the opening (6) in the insulating shield (8.1) and both edges of the inner and outer conductive layers (12, 7) of the sleeve insulating body in the interface (16).

2. The sleeve insulating body with screw connector of claim 1,
**characterized in that** the cross section of the grommet (8.2) is variable and selected such that different shapes of conductors are enclosed in a water-tight manner.

3. The sleeve insulating body with screw connector of claim 2,
**characterized in that** the diameter of the grommet (8.2) is selected such that after assembly of the cable core of the smallest conductor cross-section of the field of application it is extended by 5%.

4. The sleeve insulating body with screw connector of claim 1,
**characterized in that** the openings (6) have a formed cylindrical or curved margin (6.1) the surface of which is engaged by the plug shank (10.1) with the applied field controlling layer (11) is engaged and that the cylindrical margin (6.1) is concentrically covered by the plug head (10.2).

5. The sleeve insulating body with screw connector of one of claims 1 or 4,
**characterized in that** the plug head (10.2) and cylindrical or curved margin (6.1) of the opening (6) in the insulating jacket (8.1) at their outer contact surfaces are provided with a matching profile for ensuring a reliable fixing of the plug (10) and covering of the opening (6).

6. The sleeve insulating body with screw connector of one of claims 1, 4 or 5,
**characterized in that** for covering the cylindrical or curved margin (6.1) of the opening (6) the plug head (10.2) is angled in the direction of the cable axis and and vertically of the cable axis.

7. The sleeve insulating body with screw connector of one of claims 1 or 4 to 6,
**characterized in that** the plug (10) in the area of its shank (10.1) and head (10.2) is completely structured of the field controlling material of the layer (11).

8. The sleeve insulating body with screw connector of one of claims 1 or 4 to 7,
**characterized in that** the external diameter of the plug (10) including the field controlling layer (11) is at least 5% greater than the internal diameter of the opening (6).

9. The sleeve insulating body with screw connector of one of claims 1 or 4 to 7,
**characterized in that** for controlling the field the edges (13) of the inner (12) and of the outer conductive layer (7, 7.1) of the sleeve insulating body (8) protruding into the opening (6) are rounded or of funnel-shape.

10. The sleeve insulating body with screw connector of claim 1,
**characterized in that** when closing the openings (6) in the insulating jacket (8.1) of the sleeve by the tubular elastic cuff (17) the cuff mounted on the sleeve insulating body (8) has at least one approximately circular opening (17.1) of about the same size as the opening (6) in the insulating jacket (8.1) and which during assembly is positioned over the opening (6) to expose it and which after completed assembly is arranged rotated by about 180° such that for fixing the cuff (17) in its final position a protrusion (8.3) extending out of the insulating jacket (8.1) of the sleeve approximately opposite the opening (6) is embraced.

11. The sleeve insulating body with screw connector of claim 10,
**characterized in that** the insulating jacket (8.1) is provided with a margin (15) the height of which in the opening (6) preferably corresponds to the thickness of the insulating jacket (8.1) over the screw connector (5), whereby the inner conductive layer (12) of the sleeve insulating body is extending outwardly to form the margin (15) circumscribing the opening (6).

12. The sleeve insulating body with screw connector of one of claims 10 or 11,
**characterized in that** the outer conductive layer (7) of the sleeve insulating body which circumscribes the opening (6) is sufficiently interrupted to form a constant distance to the margin (15) of the inner conductive layer (12) which forms the insulating area of the interface (16).

13. The sleeve insulating body with screw connector of claim 12,
**characterized in that** the insulation distance of the interface (16), i.e. the distance between the margins of the inner and outer conductive layers (12, 7) of the sleeve insulating body is between approximately 5 mm and approximately 30 mm, depending on the insulation voltage of the sleeve.

14. The sleeve insulating body with screw connector of one of claims 10 to 13,
**characterized in that** at the internal surface of the field controlling layer (14) the cuff (17) is provided with a protrusion (17.2) disposed such that in the final position it positively protrudes into the opening (6) of the insulating shield.

15. The sleeve insulating body with screw connector of claim 14,
**characterized in that** the protrusion (17.2) in the field controlling layer (14) is conductively coated or consists of a conductive elastomeric material.

16. The sleeve insulating body with screw connector of one of claims 10 to 15,
**characterized in that** in its initial state the tubular elastic cuff (17) is dimensioned such that its internal diameter Dᵢ, is smaller than the external diameter Dₐ of connector (5) and insulating jacket (8.1) over the outer conductive layer (7).

17. The sleeve insulating body with screw connector of one of claims 10 to 16,
**characterized in that** the two pairs insulating jacket-opening (6) and cuff protrusion (17.2) on the one hand and cuff-opening (17.1) and insulating jacket protrusion (8.3) on the other hand are arranged above the radial circumference of the sleeve such that in the final position the two protrusions are not in superposition.

18. The sleeve insulating body with screw connector of one of claims 10 to 17,
**characterized in that** circumferential protrusions are arranged at both ends of the cuffs (17).

19. The sleeve insulating body with screw connector of one of claims 10 to 18,
**characterized in that** the field controlling layer (14) in the cuff (17) is disposed only in the area of the insulating space of the interface (16).

20. The sleeve insulating body with screw connector of one of claims 10 to 19,
**characterized in that** a geometric field regulation is utilized in the interface (16) according to the subclaims.

21. The sleeve insulating body with screw connector of one of claims 10 to 19,
**characterized in that** no special field regulation is utilized in the interface (16) and that the configuration of the outer and of the inner conductive layer (7, 12) abutting the margin provides the geometric field regulation.

22. The sleeve insulating body with screw connector of one of claims 10 to 21,
**characterized in that** the cuff (17) is formed as a single piece for two to four shear-off screws.

23. Use of the sleeve insulating body with cuff of one of claims 10 to 22,
**characterized in that** the basic construction without conductive layers and field controlling layers may also be utilized in connection sleeves up to 1 kV.

24. The sleeve insulating body with screw connector of one of claims 1 to 23,
**characterized in that** the field controlling element (9) over the cable end is integrated in the grommet (8.2).

25. The sleeve insulating body with screw connector of one of claims 1 to 24,
**characterized in that** it is structured as a branch-off sleeve whereby one or more cable inputs are provided and that for each cable input one or two further screw openings (6) are provided with plugs (10).

## Revendications

1. Corps isolant à manchon (8) à connecteur à vis (5) pour la réalisation d'une connexion de câble pour câbles en matière plastique moyenne tension en utilisant une pièce de serrage (5.1) métallique en forme de douille comportant des puits à vis perpendiculaires à l'axe du connecteur et du câble dans lesquels peuvent être posées des vis de serrage (5.2), et des moyens, disposés au-dessus du connecteur à vis jusque dans la zone recouvrant le bord de retrait de la couche conductrice extérieure (1) du câble, pour diminuer l'intensité du champ électrique,
**caractérisé par le fait que** le connecteur à vis métallique (5) composé de la pièce de serrage (5.1) et de vis de serrage (5.2) est enveloppé de manière fixe par le corps isolant à manchon (8), où
a) le corps isolant à manchon (8) est constitué d'une gaine isolante (8.1) qui entoure le connecteur à vis (5) et se prolonge des deux côtés du connecteur par des fourreaux élastiques (8.2) recevant les extrémités de câbles,
b) des ouvertures (6) sont pratiquées dans la gaine isolante (8.1) au niveau des accès aux vis de serrage (5.2), lesquelles ouvertures peuvent être obturées par des bouchons (10) en matériau isolant ou une manchette élastique tubulaire (17),
c) dans chaque fourreau (8.2) il existe un élément de contrôle ou de commande de champ entre la couche conductrice extérieure (1) du câble insérable, à chaque extrémité du câble, et une couche conductrice intérieure (12) du corps isolant à manchon (8),
d) dans le cas de l'obturation des ouvertures (6) par des bouchons (10), les parois des fûts de bouchons (10.1) pénétrant dans les ouvertures (6) présentent un contrôle de champ, de préférence au moins une couche de contrôle ou de commande de champ (11) agissant par réfraction, et la surface du couvercle de bouchon (10.2) possède une couche conductrice extérieure (7.1) électriquement connectée avec la couche conductrice extérieure du corps isolant à manchon (7),
e) dans le cas de l'obturation des ouvertures (6) par une manchette élastique tubulaire (17), il est prévu sur la surface intérieure supérieure de la manchette (17) une couche de contrôle ou de commande de champ (14) agissant par réfraction, dimensionnée et disposée de manière à recouvrir à coup sûr, dans la position finale de la manchette (17), l'ouverture (6) de la gaine isolante (8.1) et les deux bords des couches conductrices intérieure et extérieure (12, 7) du corps isolant à manchon à l'interface (16).

2. Corps isolant à manchon à connecteur à vis selon la revendication 1,
**caractérisé par le fait que** la section du fourreau (8.2) est variable et choisie de manière à former une enveloppe étanche à l'eau pour différentes formes de conducteurs.

3. Corps isolant à manchon à connecteur à vis selon la revendication 2,
**caractérisé par le fait que** le diamètre du fourreau (8.2) est choisi de manière à ce qu'il soit étiré d'au moins 5 % après le montage des brins de câble de la plus petite section de conducteur du domaine d'emploi.

4. Corps isolant à manchon à connecteur à vis selon la revendication 1,
**caractérisé par le fait que** les ouvertures (6) présentent un bord cylindrique ou courbe (6.1) saillant, contre lequel le fût de bouchon (10.1) vient s'appuyer en nappe par sa couche de contrôle de champ (11) et que ce bord cylindrique (6.1) est recouvert concentriquement par le couvercle de bouchon (10.2).

5. Corps isolant à manchon à connecteur à vis selon la revendication 1 ou 4,
**caractérisé par le fait que** l'appariement couvercle de bouchon (10.2) et bord cylindrique ou courbe (6.1) de l'ouverture (6) de la gaine isolante (8.1) présente à sa surface de contact extérieure un profilage adapté qui assure une fixation fiable du bouchon (10) et le recouvrement de l'ouverture (6).

6. Corps isolant à manchon à connecteur à vis selon l'une des revendications 1, 4 ou 5,
**caractérisé par le fait que** le couvercle de bouchon (10.2) recouvrant le bord cylindrique ou courbe (6.1) de l'ouverture (6) est coudé en direction de l'axe du câble et perpendiculairement à l'axe du câble.

7. Corps isolant à manchon à connecteur à vis selon l'une des revendications 1 ou 4 à 6,
**caractérisé par le fait que** le bouchon (10) est entièrement constitué du matériau de contrôle ou de commande de champ agissant par réfraction de la couche (11) au niveau du fût de bouchon (10.1) et du couvercle de bouchon (10.2).

8. Corps isolant à manchon à connecteur à vis selon l'une des revendications 1 ou 4 à 7,
**caractérisé par le fait que** le diamètre extérieur du bouchon (10) muni de la couche de contrôle de champ (11) est supérieur d'au moins 5 % au diamètre intérieur de l'ouverture (6).

9. Corps isolant à manchon à connecteur à vis selon l'une des revendications 1 ou 4 à 8,
**caractérisé par le fait que**, dans un but de contrôle ou de commande de champ, les bords (13) des couches conductrices intérieure (12) et extérieure (7, 7.1) du corps isolant à manchon (8) faisant saillie dans l'ouverture (6) sont arrondis ou formés en entonnoir.

10. Corps isolant à manchon à connecteur à vis selon la revendication 1,
**caractérisé par le fait que** dans le cas de l'obturation des ouvertures (6) de la gaine isolante (8.1) du manchon par la manchette élastique tubulaire (17), cette manchette montée sur le corps isolant à manchon (8) présente au moins un passage approximativement circulaire (17.1) qui possède à peu près la même dimension que l'ouverture (6) de la gaine isolante (8.1) et qui se positionne lors du montage au-dessus de l'ouverture (6), dégageant cette dernière, et qui, après le montage, par rotation d'environ 180°, se trouve disposé de manière à saisir un épaississement (8.3) faisant saillie de la gaine isolante (8.1) du manchon à peu près à l'opposé de l'ouverture (6) pour bloquer la manchette (17) dans sa position finale.

11. Corps isolant à manchon à connecteur à vis selon la revendication 10,
**caractérisé par le fait que** la gaine isolante (8.1) présente un bord (15) dont la hauteur dans l'ouverture (6) correspond de préférence à l'épaisseur de la gaine isolante (8.1) au-dessus du connecteur à vis (5), la couche conductrice intérieure (12) du corps isolant à manchon étant menée vers l'extérieur et formant ce bord périphérique (15) dans l'ouverture (6).

12. Corps isolant à manchon à connecteur à vis selon la revendication 10 ou 11,
**caractérisé par le fait que** la couche conductrice extérieure (7) du corps isolant à manchon qui entoure l'ouverture (6) est interrompue de manière à produire une distance constante avec le bord (15) de la couche conductrice intérieure (12), formant ainsi la zone isolante de l'interface (16).

13. Corps isolant à manchon à connecteur à vis selon la revendication 12,
**caractérisé par le fait que** la distance d'isolement de l'interface (16), c.-à-d. la distance des bords des couches conductrices intérieure et extérieure (12, 7) du corps isolant à manchon, se situe, en fonction de la tension d'isolement du manchon, dans la plage comprise entre environ 5 mm et environ 30 mm.

14. Corps isolant à manchon à connecteur à vis selon l'une des revendications 10 à 13,
**caractérisé par le fait que** la manchette (17) présente du côté intérieur de la couche de contrôle de champ (14) un épaississement (17.2) disposé de manière à s'insérer en position finale dans l'ouverture (6) de la gaine isolante (8.1) par ajustement géométrique.

15. Corps isolant à manchon à connecteur à vis selon la revendication 14,
**caractérisé par le fait que** l'épaississement (17.2) de la couche de contrôle de champ (14) est revêtu d'un matériau conducteur ou constitué d'un élastomère conducteur.

16. Corps isolant à manchon à connecteur à vis selon l'une des revendications 10 à 15,
**caractérisé par le fait que** les dimensions de la manchette élastique tubulaire (17) à l'état initial sont telles que son diamètre intérieur Dᵢ est plus petit que le diamètre extérieur Dₐ du connecteur (5) et de la gaine isolante (8.1) au-dessus de la couche conductrice extérieure (7).

17. Corps isolant à manchon à connecteur à vis selon l'une des revendications 10 à 16,
**caractérisé par le fait que** les deux appariements gaine isolante-ouverture (6) et épaississement de manchette (17.2) d'une part ainsi que passage de manchette (17.1) et épaississement de gaine isolante (8.3) d'autre part sont disposés sur le pourtour radial du manchon de manière à ce que les deux épaississements ne tombent pas l'un sur l'autre dans la position finale.

18. Corps isolant à manchon à connecteur à vis selon l'une des revendications 10 à 17,
**caractérisé par le fait que** des renflements sont disposés de part et d'autre des manchettes (17).

19. Corps isolant à manchon à connecteur à vis selon l'une des revendications 10 à 18,
**caractérisé par le fait que** la couche de contrôle ou de commande de champ (14) dans la manchette (17) ne se trouve qu'au niveau de la distance d'isolement de l'interface (16).

20. Corps isolant à manchon à connecteur à vis selon l'une des revendications 10 à 19,
**caractérisé par le fait que** l'on utilise dans l'interface (16) un contrôle ou une commande de champ géométrique conforme aux sous-revendications.

21. Corps isolant à manchon à connecteur à vis selon l'une des revendications 10 à 19,
**caractérisé par le fait que** l'on n'utilise pas de contrôle ou commande de champ séparé dans l'interface (16) et que l'amenée près du bord des couches conductrices extérieure et intérieure (7, 12) produit le contrôle ou la commande de champ géométrique.

22. Corps isolant à manchon à connecteur à vis selon l'une des revendications 10 à 21,
**caractérisé par le fait que** la manchette (17) est réalisée en une pièce pour deux à quatre vis de cisaillement.

23. Utilisation du corps isolant à manchon à connecteur à vis selon l'une des revendications 10 à 22,
**caractérisée par le fait que** la structure de principe est également applicable sans couches conductrices ni couches de contrôle ou de commande de champ à des manchons de connexion jusqu'à 1 kV.

24. Corps isolant à manchon à connecteur à vis selon l'une des revendications 1 à 23,
**caractérisé par le fait que** l'élément de contrôle de champ (9) recouvrant l'extrémité de câble est intégré dans le fourreau (8.2)

25. Corps isolant à manchon à connecteur à vis selon l'une des revendications 1 à 24,
**caractérisé par le fait qu'**il est réalisé sous forme de manchon de dérivation dans lequel sont prévues une ou plusieurs entrées de câbles supplémentaires ainsi que, pour chaque entrée de câble, une ou deux ouvertures à vis (6) supplémentaires avec bouchon (10).
